# EUROPEAN PATENT SPECIFICATION

(11) **EP 3 401 084 B1**
(45) Date of publication and mention of the grant of the patent: **30.12.2020**
(21) Application number: 18170510.4
(22) Date of filing: 03.05.2018
(51) Int. Cl.: B29C 64/393

(54) **METHOD OF NESTING THREE-DIMENSIONAL PRINT OBJECTS**
VERFAHREN ZUM VERSCHACHTELN VON DREIDIMENSIONALEN DRUCKOBJEKTEN
PROCÉDÉ D'EMBOÎTEMENT D'OBJETS D'IMPRESSION TRIDIMENSIONNELS

(30) Priority: 09.05.2017 EP 17170107
(43) Date of publication of application: 14.11.2018
(73) Proprietor: Canon Production Printing Holding B.V., 5914 HH Venlo (NL)
(72) Inventor: COLLOMP, Jérome, 5914 CA Venlo (NL)
(74) Representative: Canon Production Printing IP Department

(56) References cited:
- WO-A1-2011/100978
- WO-A1-2016/041955
- US-B1- 6 980 934

## Description

The invention relates to a method of nesting three-dimensional print objects on a print surface of a printer, wherein the locations for the print objects on the print surface are determined in view of the shape and size of the footprints of the objects so as to minimize the surface area required for accommodating the objects, and the locations for the print objects are determined also in view of intended heights of the objects, and objects with equal or similar height are grouped together, the method comprising a step of grouping the objects into classes of objects with similar heights, and a step of nesting the objects class by class.

Nesting algorithms for placing two-dimensional print objects with regular or irregular shapes on a print substrate or print surface are well known in the art. The purpose of the nesting algorithms is to arrange the print objects in a configuration as compact as possible in order to minimize the consumption of media sheet material and, in case of a printer with a scanning-type print head, in order to permit a high printing efficiency by minimizing the distance of travel of the print head.

A nesting method according to the preamble of claim 1 has been disclosed in WO 2011/100978 A1.

US 6 980 934 B1 discloses a method of nesting 3D objects in a target volume.

WO 2016/041955 A1 discloses a method wherein a plurality of print objects are printed onto separate print substrates which have different thicknesses. In that case the z-position of the print head in the direction normal to the print surface has to be adapted to the thickness of the print substrates, and in order to rationalise the print process, the print objects and their print substrates are nested such that substrates with equal or similar thickness are disposed adjacent to one another so that they can be printed in a continuous scan pass without having to adapt the height of the print head in-between.

Applicant has been observed that in the prior art methods quality issues sometimes arise in the form of the printed surface having colours that are inconsistent between different printed objects (in the same batch), height deviations, and cracking of the printed surface.

It is an object of the invention to improve the print quality in 3D or relief printing.

In order to achieve this object, according to the invention, the method is performed on a printer having a print head movable relative to the print surface in a main scanning direction and sub-scanning direction normal to the main scanning direction, and in that the objects of each class are nested in a separate shelf that extends in the main scanning direction on the print surface and has a constant width in the sub-scanning direction.

In 3D printing, the print objects have a certain extension or height in the z-direction normal to the print surface. Print applications in which the height of the objects is relatively small are frequently termed "relief printing" or "2.5D printing". In the present disclosure , the term "three-dimensional" or "3D" shall be used as a generic term for relief printing and true 3D printing.

The 3D print objects are printed in several scan passes, wherein a layer of ink is applied in each pass. A newly applied ink layer is cured, e.g. by irradiating it with UV light, so that the newly applied ink becomes solid before the next ink layer is printed. As the height of the object increases in the course of the print process, the z-position of the print head or print heads (for different colours) is adapted. Naturally, printing an object with a larger height will require a larger number of scan passes.

The quality issues observed with the prior art methods were actually inversely correlated with the height of the printed objects. Even more specific; it appeared that printed objects in proximity to other and higher printed objects were more prone to these quality issues. Further investigation showed that the observed quality issues were caused by overcuring of the lower printed objects. Once the lower objects are printed, the print head still keeps on passing over the lower objects as it is still making scanning movements to print the higher objects that are in proximity to the lower, already printed object. When the print head passes over the higher object to deposit ink on the higher object, the deposited ink is also cured, for example by radiating the ink, to solidify the deposited ink. However, it cannot be completed prevented that the ink of the lower, already printed object is at least partly cured too during the same curing operation resulting in overcuring of the lower, already printed object. The excessive amount of curing occurring thus results to some extent in colour deviation, volume changes, and surface cracking.
An advantage of the present invention is obtained in cases where curing means such as radiation sources are carried on the print heads or on a print head carriage. In that case, in order to obtain a high print quality, it is required that the intensity of curing is adjusted properly and is neither too large nor too small. When the print objects are arranged on the print surface without paying attention to the heights of the objects, higher and lower print objects will be interleaved on the print surface, and when the print head and the curing means scan the print surface while printing the top layers of the higher objects, the top surfaces of the less high objects which had been cured already will be cured again and again, so that the curing intensity may become too high, and the print quality will be degraded. Since, according to the invention, the higher objects are grouped together, the top layers of the higher objects can be printed while the scan movements of the print head are confined to the restricted area where the higher objects are located, and over-curing of the less high objects can be avoided.

By grouping objects to be printed with a similar height and arrange these groups such that they extend in the direction of the main scanning direction of the print head, all objects produced during the same main scan movements have a similar height and the building up of these objects completes after a more-or-less similar amount of passes by the print head resulting in the proper amount of curing for all objects.

The method according to the invention, requiring that objects with equal or similar height are grouped together, may lead to a configuration which may be not quite as compact as would be achieved with conventional nesting algorithms which disregard the height of the objects, but the invention has the additional advantage that it permits to reduce the distance of travel of the print head because, when the print objects with a lower height have been completed, the print head needs to scan only those shelves of the print surface which contain objects with a larger height. Moreover, the objects with lower height will generally be formed at locations which are remote from the area where the higher objects are still being printed, and it is therefore possible to cut the print substrate (if the objects are printed on a common media sheet), to remove the printed objects from the print surface and to package them while the printer is still busy with printing the higher objects (or vice versa), and yet there is no substantial risk that an operator or tools used for cutting or removing the printed objects collide with the print head.

The printer used for carrying out the invention is of a type wherein the print head moves in a main scanning direction along a gantry and the gantry moves relative to the print surface in a sub-scanning direction normal to the main scanning direction. The print objects with equal or similar height are aligned in the main scanning direction, whereas objects with significantly different heights are offset relative to one another in the sub-scanning direction. The print head may then perform complete scan passes in the main scanning direction, which assures a high positional accuracy of the ink dots being printed, and the scanned area can be confined by limiting the range in which the gantry moves in the sub-scanning direction.

The print surface is divided into stripe-shaped areas which extend in the main scanning direction and are designated as "shelves" hereinafter. Print objects of different heights are nested in different shelves, so that the print objects within a shelf will always have essentially the same height. Then, for nesting the objects within a single shelf, it is possible to use the well known and readily available nesting algorithms that are presently being used in two-dimensional printing.

Depending upon the type of ink and the curing method, certain height differences between the print objects within the same shelf may be tolerated. In that case the required number of shelves may be smaller than the number of different object heights occurring in the set of objects to be printed. Consequently, the size of the shelves will be larger which makes the conventional two-dimensional nesting algorithms more powerful.

More specific optional features of the invention are indicated in the dependent claims. Embodiment examples will now be described in conjunction with the drawings, wherein:
- Fig. 1: is a schematic view of a printing system to which the invention is applicable;
- Fig. 2: is an example of a conventional layout of print objects on a print surface;
- Fig. 3: is a schematic perspective view of the three-dimensional print objects in the layout shown in Fig. 2 (with object heights being exaggerated);
- Figs. 4 and 5: are a top plan view and a perspective view of a layout obtained by a method according to the invention;
- Figs. 6 and 7: are a top plan view and a perspective view of a layout obtained by a method according to a another embodiment of the invention; and
- Fig. 8: a flow diagram illustrating an embodiment of the invention.

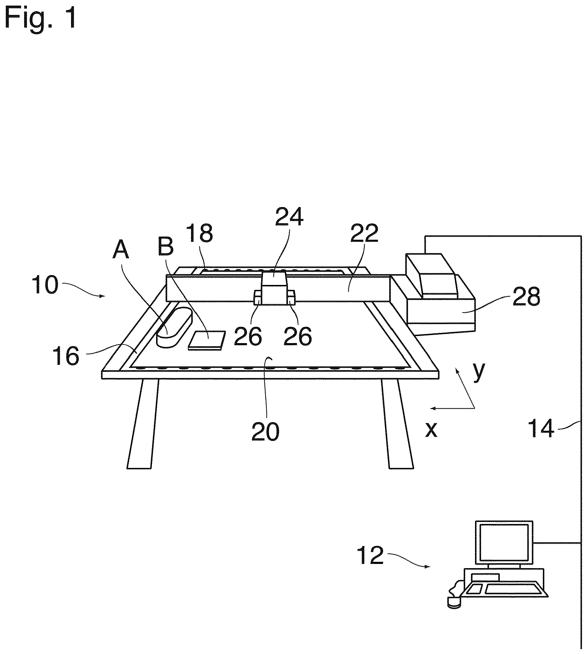

Fig. 1 shows a printing system comprising a flat bed printer 10 and a workstation 12 connected to the printer via a network 14 and permitting to compile and edit print jobs to be executed with the printer 10.

The printer 10 has a flat bed with a rectangular print surface 16 in which a regular pattern of suction holes 18 has been formed. The suction holes are connected to a vacuum source, so that a print substrate 20, e.g. a rectangular sheet of paper, can be sucked against the print surface so as to be immobilized on the flat bed.

A gantry 22 extends across the print surface 16 in a main scanning direction x and is itself movable relative to the print surface in a sub-scanning direction y. A print head 24, e.g. an ink jet print head, is driven for reciprocating movement along the gantry 22 in the main scanning direction x and is controlled to eject a curable ink, e.g. UV-curable ink, onto the print substrate 20 in several superposed layers so as to form three-dimensional print objects A, B. UV curing lamps 26 are attached to both ends of the print head so that printed ink dots may be cured after a well defined dwell time regardless of the direction of movement of the print head.

The movements of the gantry 22 and of the print head 24 and the ejection of ink by the print head are controlled by a print controller 28.

Before the print process starts, a nesting algorithm is employed for placing the print objects (i.e. objects still to be printed), such as the objects A and B, on the print surface 16 in a layout which permits a printing efficiency as high as possible and at the same time minimizes the consumption of sheet material of the print substrate 20.

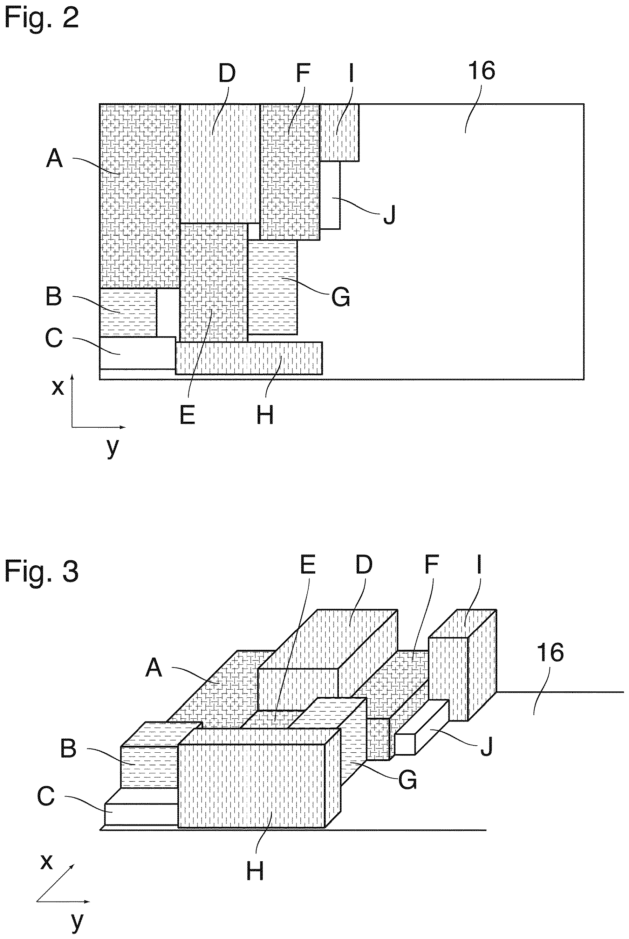

Fig. 2 shows an example of a layout that has been obtained by using a conventional nesting algorithm for placing print objects A - J on the print surface 16. The print objects have been represented by their rectangular bounding boxes. The nesting algorithm that has been used here has taken into account only the lengths and the widths of the bounding boxes and has employed a set of rules assuring that the space available on the print surface 16 is filled as completely as possible in the main scanning direction, in order to be able to print as many objects as possible in a common scan pass, and the layout is as compact as possible in the sub-scanning direction y, so as to minimize the total number of required scan passes.

Fig. 3 shows the same layout as Fig. 2 , but in a perspective view so as to visualize the different heights of the print objects A - J. It can be seen that the heights of the objects are distributed irregularly over the print surface 16. A suitable measure for the height of the print objects is the number of ink layers composing the object and, accordingly, the number of scan passes required for printing the object. By way of example it is assumed that the objects C and J in Figs. 2 and 3 have a height 5 (5 layers), the objects A, E and F have the height 10, the objects B and G have the height 15 and the objects D, H and I have the height 20.

Consequently, when the objects A, B and C are being printed, the print head has to scan swathes extending in the main scanning direction x along the left margin of the print surface 16 in Fig. 2 fifteen times, because the object B has the height 15. After the first five scan passes the object C has been completed. Nevertheless, the print head 24 and the curing lamps 26 are still moved over the entire width of the print surface, because this permits a higher accuracy of the positions of the printed ink dots in the direction x. For example, a point in time when the print head passes the left or right edge of the print substrate 16 (as seen in the sub-scanning direction y) may be taken as a common time reference for the timings at which the individual nozzles of the print heads are fired. Moreover, moving the print head carriage only over smaller distances in the main scanning direction x would increase the frequency of acceleration and deceleration phases for the carriage and would increase the wear on the drive system.

After ten scan passes, the object A has also been completed, so that the print head is idle most of the time during a scan pass and is active only when passing over the object B which is still being printed. The long idle times of the print head result in a poor printing efficiency.

Moreover, the top surface of the object C has been cured wit a sufficient intensity by one of the curing lamps 26 in the fifth scan pass. However, since the print head carriage performs ten further scan passes in order to print the object B, and since it is convenient or mandatory in many printers to keep the curing lamps 26 switched on permanently, the top surface of the object C is exposed to curing light in as many as ten additional scan passes. This may result in an over-curing of the top layer of ink of the object C and, as a consequence, in an undesired change of the color of the top ink layer.

In general, each type of ink has its own exposure characteristic requiring that the total exposure time is within a certain range which is limited by relatively narrow tolerance boundaries. The layout shown in Figs. 2 and 3 has the effect that the tolerance boundaries for the exposure time are exceeded for many objects, not only for the object C but also for the objects E and F and even more for the object J which would be cured sixteen times in total.

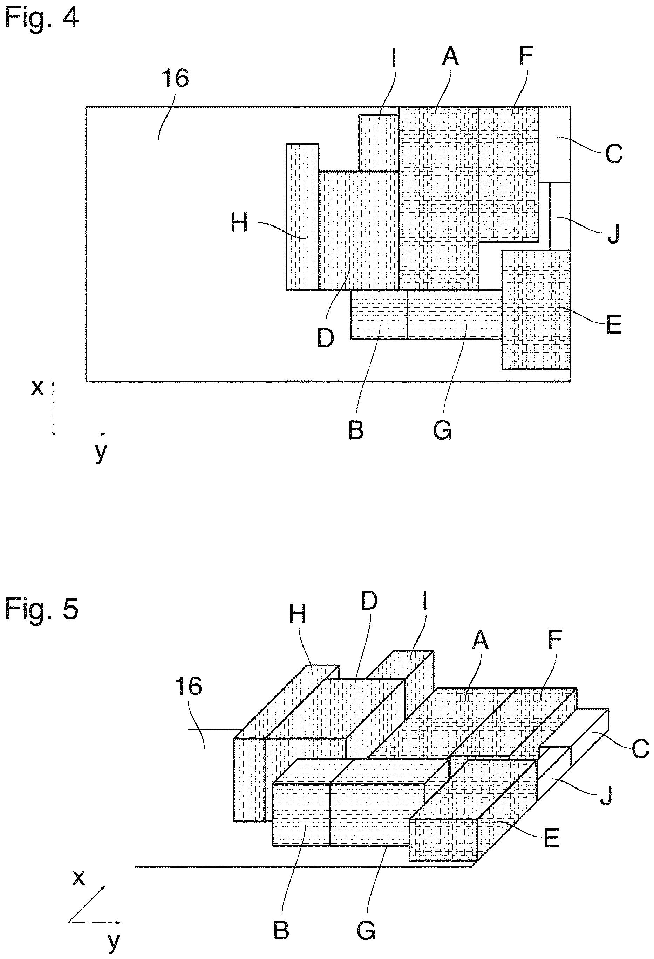

Figs. 4 and 5 show a layout in which the same print objects A - J as in Figs. 2 and 3 have been placed by means of a nesting algorithm according to the invention, which takes the different heights of the objects into account and aims at grouping together objects of equal or similar height. In this example, the objects A - J have first been sorted by their heights, and the nesting method has started with first placing the objects C and J with the lowest height, this time starting at the right edge of the print surface 16. Then, the objects A, E and F with the second lowest height have been placed, followed by the objects B and G with the third lowest height, and finally the objects D, H and I with the largest height have been placed.

In this case, when the objects C and J have been completed, the print head has to perform only five further scan passes in order to print the object E, so that the over-curing of the objects C and J is reduced significantly. Further, since the objects C, J, E and F have only a maximum height of ten, these objects can be printed within a relatively short time, and as soon as the object F has been completed the print substrate 20 may be cut and the objects C, J, E and F may be packaged already while the printer is still busy with printing the objects A and G. Similarly, the objects A and G can be packaged as soon as the object G has been completed, and the over-curing of the top layer of object A will be limited to five scan passes. Further, when the objects B, D, I and H are printed, the over-curing will in no case be larger than five scan passes, and the objects I, D and B can be removed and packaged already while the object H is still being printed.

In this way, the method according to the invention achieves a significant improvement in print quality and printing efficiency.

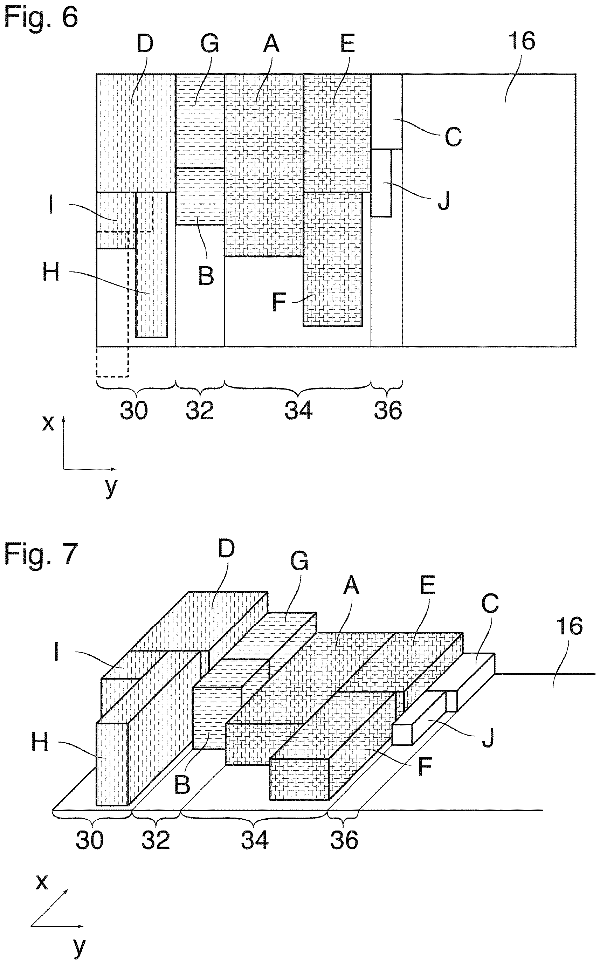

Figs. 6 and 7 show another layout that has been obtained by a method according to a modified embodiment of the invention. Here, the print surface 16 has been divided into shelves 30, 32, 34 and 36, i.e. stripe-shaped areas that extend in the main scanning direction x. Each shelf includes only print objects with the same height. In the example shown the print objects have been sorted by non-increasing height, and the nesting process has started with the objects D, E and H with the largest height, which are accommodated in shelf 30. The process of nesting the print objects within a shelf can be based on well-known nesting algorithms for two-dimensional objects. For example, the two-dimensional nesting algorithm may comprise the following set of rules:
The print objects are sorted by non-increasing values of their shortest edge. In case of the objects D, H and I this would be the order D - I - H.

The objects are then placed within the shelves in that order. The first object to be placed (object B) is oriented such that its shortest edge extends in the sub-scanning direction y. The width of the object in the sub-scanning direction determines a width of a sub-shelf. In the example shown in Fig. 6 , the shelf 30 comprises only a single sub-shelf.

If the next object to be placed (object I) fits into the sub-shelf in both orientations (which is the case for object I), it is tentatively placed in the orientation in which the shortest edge extends in the main scanning direction x (unlike the orientation shown in Fig. 6).

The further objects are packed adjacent to one another and successively in the main scanning direction, also with the shortest edge extending in the main scanning direction, if possible. If an object fits into the shelf or sub-shelf only in one orientation (as the object H), this object is placed in the orientation in which it fits. If there are so many objects to be placed that the available space of the sub-shelf in the main scanning direction x is exhausted, a new sub-shelf is opened, and the rules stated above apply also to that sub-shelf, i.e. the first object is placed in an orientation with the shortest edge extending in the sub-scanning direction y.

In the example shown, the above rules would have meant that the objects I and H were placed in positions shown in dashed lines in Fig. 6, and the object H would have exceed the boundary of the print surface 16 in the main scanning direction. It would therefore have been necessary to open another sub-shelf for accommodating the object H, which would have increased the width of the shelf 30. This is why an exemption rule has been applied to the objects I and H. As is shown in Fig. 6, the object H fits within the boundary of the print surface 16 if it is placed in a different layer than the object I, directly adjacent to the object D. In that case, however, it is preferable to rotate the object I by 90°, as shown in Fig. 6, in order to minimize the space requirement in the main scanning direction y. In the given example this has the advantageous effect, that all three objects can be accommodated in a common sub-shelf which has only the width of the shelf 30.

When all objects with the same height have been placed, the shelf is closed, and a new shelf 32 is opened for the objects G, B of the next lower height. The same rules as above apply for nesting the objects G and B within that shelf 32, and the same applies also to the nesting of the objects A, E and F in shelf 34 and the objects C, J in shelf 36. In the example shown, the shelf 34 comprises two sub-shelves accommodating the object A and the objects E and F, respectively.

Again, as is shown in Fig. 7, objects with equal height are grouped together. In this case, however, the objects of the same height are also accommodated in a common shelf with the smallest possible width. This has the advantage that no over-curing whatsoever will occur when the objects of the given height are printed. Moreover, the printing efficiency is increased further because all objects within a shelf will be completed at the same time, so that the print process can proceed to the next shelf and the completed objects can be cut and removed.

According to a generalization of the method described in conjunction with Figs. 6 and 7, the requirement that all objects within a shelf must have the same height is replaced by the less strict requirement that the heights of the object within a shelf must all lie within a certain tolerance range the width of which will depend upon the curing properties of the ink. This modification has the consequence that minor over-curing (in an acceptable degree) may occur, but on the other hand, the number of shelves may be decreased and, consequently, the individual shelves will have a larger width which provides more flexibility for placing the objects within the shelves.

In the methods described in conjunction with Figs., 6 and 7, it has been assumed that all objects to be printed fit within the print surface 16. The method may however be extended to a case where the number and sizes of the print objects are so large that the objects must be printed in several batches, each batch consisting of objects that fit on the print surface 16 together. In that case, the nesting process described above is continued regardless of the limited length of the print surface 16 in the sub-scanning direction y, and when the widths of all shelves have been determined, the shelves are combined into finite bins (each bin having the length of the print surface 16 in the sub-scanning direction y), using well known Best-Fit-Decreasing algorithms for a one-dimensional bin packing. Then, this one-dimensional packing algorithm will assure that the required number of batches is minimized.

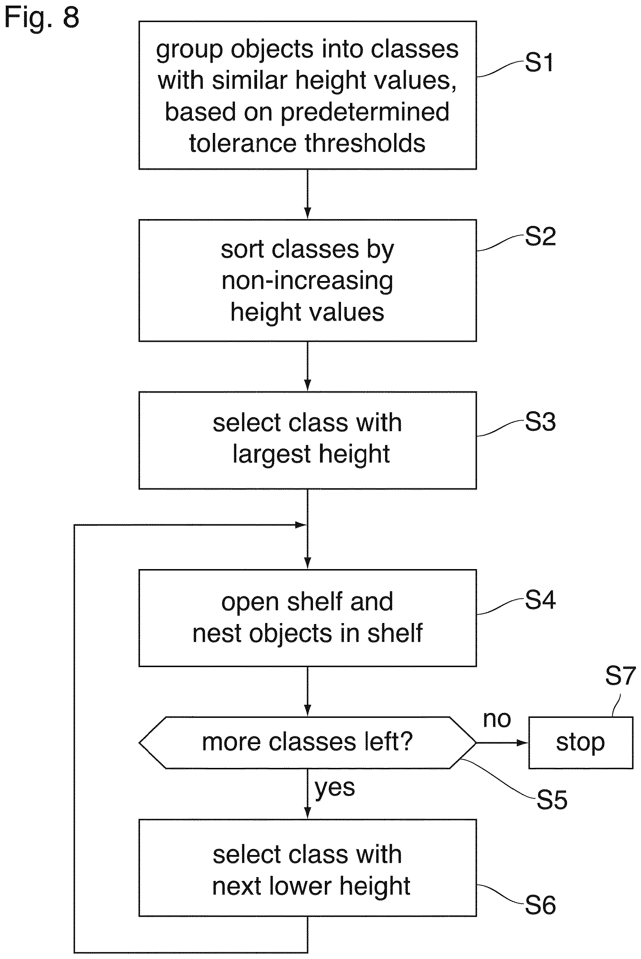

Essential steps of the method according to the invention will now be described in conjunction with the flow diagram shown in Fig. 8.

In step S1, the objects to be printed are grouped into classes with similar height values, based on predetermined tolerance thresholds. In the example shown in Fig. 6 and 7, the tolerance thresholds are zero, so that all objects in a group have exactly the same height.

In step S2, the classes of objects are sorted by non-increasing height values.

Then, in step S3, the class with the largest height value is selected. In the example shown in Figs. 6 and 7, this would be the class with the objects D, H and I.

In step S4, a shelf (shelf 30) is opened for the selected class of objects, and the objects are nested in that shelf, preferably by using a conventional nesting algorithm for two-dimensional objects.

Then it is checked in step S5 whether there are still any objects left and, consequently, there is at least one more class of objects to be nested. If that is the case ("yes"), the class of objects with the next lower height value is selected in step S6, and the process returns to step S4 for nesting the objects of that class. The steps S4, S5 and S6 are looped through until there are no more objects left (result "no" in step S5), and the process stops with step S7.

## Claims

1. A method of nesting three-dimensional print objects (A - J) intended to be printed by a printer (10) on a print surface (16) of the printer (10), wherein the method comprises the steps of
a) determining locations for the print objects on the print surface by a print controller (28) of the printer (10) in view of the shape and size of the footprints of the objects by means of a known nesting algorithm so as to minimize the surface area required for accommodating the objects,
b) determining the locations for the print objects (A - J) also in view of intended heights of the objects as specified in corresponding print jobs,
c) grouping the objects (A - J) into classes of objects, each class comprising at least one object with an equal or similar height, and
d) nesting the objects class by class, wherein the printer has a print head (24) movable relative to the print surface (16) in a main scanning direction (x) and sub-scanning direction (y) normal to the main scanning direction (x), and wherein the method comprises the step of nestingthe objects of each class in a separate shelf (30 - 36) that extends in the main scanning direction (x) on the print surface (16) and has a constant width in the sub-scanning direction (y).

2. The method according to claim 1, comprising the steps of sorting the print objects(A - J) by their intended height and nesting the sorted print objects in the sequence in which they have been sorted, the sequence extending in the sub-scanning direction (y).

3. The method according to claim 1 or 2, wherein the method comprises the step of using the known nesting algorithm for two-dimensional objects for nesting the objects of a class within the corresponding shelf.

4. A printer (10) having a print head (24) movable relative to the print surface (16) in a main scanning direction (x) and sub-scanning direction (y) normal to the main scanning direction and a print controller (28) configured to automatically perform the method according to any of the claims 1 to 3.

5. The printer according to claim 4, the printer being a flat bed printer (10).

6. The printer according to claim 4 or 5, comprising at least one curing device (26) movable together with the print head (24) and arranged for applying a curing treatment to the printed objects.

7. A computer program product embodied on a non-transitory computer-readable medium, comprising program code which, when executed on a computer (12; 28), causes the computer the method according to any of the claims 1 to 3.

## Patentansprüche

1. Verfahren zum Platzieren von dreidimensionalen Druckobjekten (A-J), die mit einem Drucker (10) auf eine Druckoberfläche (16) des Druckers (10) gedruckt werden soll, welches Verfahren die folgenden Schritte aufweist:
a) bestimmen von Orten für die Druckobjekte auf der Druckoberfläche mit Hilfe einer Druckersteuerung (28) des Druckers im Hinblick auf die Form und Größe der Grundrisse der Objekte mit Hilfe eines bekannten Platzierungsalgorithmus, derart, dass die für die Unterbringung der Objekte benötigte Fläche minimiert wird,
b) bestimmen der Orte für die Druckobjekte (A-J) auch im Hinblick auf die vorgesehenen Höhen der Objekte, wie sie in entsprechenden Druckaufträgen spezifiziert werden,
c) gruppieren der Objekte (A-J) in Klassen von Objekten, wobei jede Klasse wenigstens ein Objekt mit einer gleichen oder ähnlichen Höhe enthält, und
d) platzieren der Objekte Klasse für Klasse,
wobei der Drucker einen Druckkopf (24) hat, der relativ zu der Druckoberfläche (16) in einer Hauptabtastrichtung (x) und einer Unterabtastrichtung (y) rechtwinklig zu der Hauptabtastrichtung (x) bewegbar ist, und wobei das Verfahren den Schritt der Platzierung der Objekte jeder Klasse auf einer separaten Bank (30 - 36) umfasst, die sich in der Hauptabtastrichtung (x) auf der Druckoberfläche (16) erstreckt und in der Unterabtastrichtung (y) eine konstante Breite hat.

2. Verfahren nach Anspruch 1, mit den Schritten des Sortierens der Druckobjekte (A-J) nach ihrer vorgesehenen Höhe und des Platzierens der sortieren Druckobjekte in der Reihenfolge, in die sie sortiert worden sind, wobei die Sequenz sich in der Unterabtastrichtung (y) erstreckt.

3. Verfahren nach Anspruch 1 oder 2, bei dem das Verfahren den Schritt der Verwendung bekannter Platzierungsalgorithmen für zweidimensionale Objekte zum Platzieren der Objekte einer Klasse in der betreffenden Bank aufweist.

4. Drucker (10) mit einem Druckkopf (24), der relativ zu der Druckoberfläche (16) in einer Hauptabtastrichtung (x) und einer Unterabtastrichtung (y) rechtwinklig zu der Hauptabtastrichtung beweglich ist, und einer Druckersteuerung (28), die dazu konfiguriert ist, automatisch das Verfahren nach einem der Ansprüche 1 bis 3 auszuführen.

5. Drucker nach Anspruch 4, bei dem der Drucker ein Flachbettdrucker (10) ist.

6. Drucker nach Anspruch 4 oder 5, mit wenigstens einer Aushärteeinrichtung (26), die zusammen mit dem Druckkopf (24) bewegbar und dazu ausgebildet ist, eine Aushärungsbehandlung auf die gedruckten Objekte anzuwenden.

7. Computerprogrammprodukt, verkörpert auf einem nichtflüchtigen, computerlesbaren Medium, mit Programmcode der, wenn er auf einem Computer (12; 28) ausgeführt wird, den Computer veranlasst, das Verfahren nach einem der Ansprüche 1 bis 3 auszuführen.

## Revendications

1. Procédé d'emboîtement d'objets (A - J) d'impression tridimensionnels prévus pour être imprimés par une imprimante (10) sur une surface d'impression (16) de l'imprimante (10), dans lequel le procédé comprend les étapes consistant à
a) déterminer des emplacements pour les objets d'impression sur la surface d'impression par un dispositif de commande d'impression (28) de l'imprimante (10) étant donné les forme et taille des empreintes des objets au moyen d'un algorithme d'emboîtement connu de façon à réduire au minimum la superficie exigée pour recevoir les objets,
b) déterminer les emplacements pour les objets (A - J) d'impression également étant donné des hauteurs prévues des objets telles que spécifiées dans des tâches d'impression correspondantes,
c) grouper les objets (A - J) en classes d'objets, chaque classe comprenant au moins un objet avec une hauteur égale ou similaire, et
d) emboîter les objets classe par classe,
dans lequel l'imprimante présente une tête d'impression (24) mobile par rapport à la surface d'impression (16) dans une direction de balayage principale (x) et une direction de balayage secondaire (y) perpendiculaire à la direction de balayage principale (x), et dans lequel le procédé comprend l'étape consistant à emboîter les objets de chaque classe dans une étagère (30 - 36) distincte qui s'étend dans la direction de balayage principale (x) sur la surface d'impression (16) et présente une largeur constante dans la direction de balayage secondaire (y).

2. Procédé selon la revendication 1, comprenant les étapes consistant à trier les objets (A - J) d'impression par leur hauteur prévue et
emboîter les objets d'impression triés dans la séquence dans laquelle ils ont été triés, la séquence s'étendant dans la direction de balayage secondaire (y).

3. Procédé selon la revendication 1 ou 2, dans lequel le procédé comprend l'étape consistant à utiliser l'algorithme d'emboîtement connu pour des objets bidimensionnels pour emboîter les objets d'une classe dans l'étagère correspondante.

4. Imprimante (10) présentant une tête d'impression (24) mobile par rapport à la surface d'impression (16) dans une direction de balayage principale (x) et une direction de balayage secondaire (y) perpendiculaire à la direction de balayage principale et un dispositif de commande d'impression (28) configuré pour mettre en œuvre automatiquement le procédé selon l'une quelconque des revendications 1 à 3.

5. Imprimante selon la revendication 4, l'imprimante étant une imprimante (10) à plat.

6. Imprimante selon la revendication 4 ou 5, comprenant au moins un dispositif de durcissement (26) mobile conjointement avec la tête d'impression (24) et agencé pour appliquer un traitement de durcissement sur les objets imprimés.

7. Produit programme d'ordinateur incorporé sur un support non transitoire lisible par ordinateur, comprenant un code de programme qui, lorsqu'il est exécuté sur un ordinateur (12 ; 28), amène l'ordinateur le procédé selon l'une quelconque des revendications 1 à 3.
